# EUROPÄISCHE PATENTSCHRIFT

(11) **EP 2 033 771 B1**
(45) Veröffentlichungstag und Bekanntmachung des Hinweises auf die Patenterteilung: **11.06.2014**
(21) Anmeldenummer: 08104918.1
(22) Anmeldetag: 30.07.2008
(51) Int. Cl.: B31B 1/26, B31B 1/74, F16P 3/14, G01V 8/12

(54) **Faltschachtelklebemaschine mit verbesserter Zugänglichkeit**
Box folding and glueing machine with improved accessibility
Machine de pliage et collage de boîte dotée d'un accès amélioré

(30) Priorität: 27.08.2007 DE 102007040626
(43) Veröffentlichungstag der Anmeldung: 11.03.2009
(73) Patentinhaber: Heidelberger Druckmaschinen Aktiengesellschaft, 69115 Heidelberg (DE)
(72) Erfinder: Jansen, Frank, 47807 Krefeld (DE)
(74) Vertreter: Franzen, Peter

(56) Entgegenhaltungen:
- EP-A1- 1 593 486
- US-A- 4 621 300
- US-E1- R E37 777

## Beschreibung

Die Erfindung betrifft eine Faltschachtelklebemaschine für die Verarbeitung von Faltschachtelzuschnitten, bestehend aus mindestens einem Einleger zum Bestücken einer nachfolgenden Bearbeitungsstation, einer Faltstation, einem Auftragwerk für einen Klebstoff, einer Überleitstation, insbesondere mit einer Ausschleuseeinrichtung, einer Sammel- und Presseinrichtung und einer Sicherheitseinrichtung für ein einen Bediener gefährdendes Maschinenteil.

Faltschachtelklebemaschinen der gattungsgemäßen Art zur Herstellung von Faltschachteln aus Faltschachtelzuschnitten weisen bekanntermaßen (siehe z. B. EP 1 593 486) zumindest die folgenden Module als Bearbeitungsstationen auf:
- Einen Einleger, der die zu verarbeitenden Zuschnitte mit hoher Geschwindigkeit aus einem Stapel nacheinander abzieht und einzeln der nachfolgenden ersten Bearbeitungsstation zuführt.
- Ein Auftragwerk für Klebstoffe, üblicherweise Leim, das auf die zu verklebenden Faltlappen einen Klebstoffstreifen aufträgt und
- eine Faltstation, in der die mit einem Klebestreifen versehenen Zuschnittteile zur Herstellung einer Klebeverbindung um 180° umgelegt, also gefaltet werden.

Im Anschluß an die Faltstation ist üblicherweise eine sogenannte Überleitstation angeordnet, in der die Schachteln gezählt, markiert und ausgeschleust werden können. Danach folgt eine Sammel- und Pressstation, an deren Anfang ein Schuppenstrom aus gefalteten Zuschnitten gebildet wird, der in der Pressstation für einige Zeit unter Druck gehalten wird, damit die beiden Zuschnittteile an der Klebenaht verbunden werden.

Um Faltungen quer zur Transportrichtung der Faltschachtelzuschnitte durchführen zu können, werden in die Faltschachtelklebemaschine zusätzliche Vorrichtungen eingebaut. Solche Vorrichtungen sind beispielsweise aus der amerikanischen Patentschrift US 4,119,018 bekannt. Sie werden zur Herstellung von Faltschachteln mit oder ohne Dreiecklappen, wie es bei den 4-Punkt-, 6-Punkt-, Faltboden- oder Spezialschachteln üblich ist, eingesetzt. Bei einer bekannten Vorrichtung dieser Art bestehen die hinteren Faltwerkzeuge aus unterhalb der Transportebene gelagerten Haken, die mit ihren freien abgekröpften Enden den zunächst flach liegenden hinteren Steg von unten angreifen und bei Weitertransport des Zuschnittes diesen überholen, so dass der Steg nach innen umgefaltet wird und flach auf dem Faltschachtelzuschnitt zu liegen kommt. Ein solches Faltwerkzeug wird auch Überholhaken genannt. Um derartige Überholhaken, die sich während des Betriebes der Faltschachtelklebemaschine sehr schnell bewegen für den Bediener der Anlage zu sichern, kann dieser Bereich mit einem Zutrittsschutz, zum Beispiel in Form einer Sicherheitstür, verschlossen werden. Diese Sicherheitsmaßnahmen schränken die Zugänglichkeit der Faltschachtelklebemaschine, insbesondere bei der Verarbeitung von Zuschnitten, die ohne den Einsatz von Überholhaken zu verarbeiten sind, aber unnötig ein.

Aus der DE 10 2004 022 212 A1 ist eine Faltschachtelklebemaschine mit einer Sicherungseinrichtung in Form eines Lichtvorhangs bekannt. Der Lichtvorhang ist in seitlichen Ständern der Faltschachtelklebemaschine angeordnet und kann wahlweise aktiviert oder deaktiviert werden, je nachdem, ob ein Überholhaken zum Einsatz kommt oder nicht.

Derartige Sicherungseinrichtungen schützen den Maschinenbediener somit vor Verletzungen an Überholwellen / -haken der Maschine. Ein Einstellen der Überholwellen / -haken und des durch erzeugten Faltvorganges der Faltschachtel ist im Stand oder bis zu einer Grundgeschwindigkeit der Maschine von etwa 20 m/min möglich. Sobald jedoch die Geschwindigkeit der Maschine größer als die Grundgeschwindigkeit der Maschine ist, wird der Lichtvorhang der Maschine aktiv geschaltet. Dies bedeutet für den Maschinenbediener, dass er sich außerhalb des Lichtvorhangs befinden muss, um die Maschine auf Produktionsgeschwindigkeit hochfahren zu können.

Da die seitlichen Ständer, in denen die Sicherheitseinrichtung eingebaut ist, ca. 1 m Abstand zur Maschine haben, ist es für den Bediener nahezu unmöglich, zu beobachten, ob die Prozessabläufe etwa in Maschinenmitte oder im Vorbrecher ordnungsgemäß ablaufen. Somit kann der Maschinenbediener nicht erkennen, wo er eine eventuell vorzunehmende Einstellungsveränderung der Faltelemente zur Anpassung des Faltvorgangs an die Maschinengeschwindigkeit vorzunehmen hat.

Aus der DE 103 10 236 B3 ist eine Sicherheitseinrichtung im Ausleger einer Bogen verarbeitenden Maschine bekannt, bei der der Bediener mittels einer Eingabevorrichtung einzelne Zugangsbereiche für die Durchführung einer bevorstehenden Bedienhandlung für ein vorgegebenes Zeitintervall deaktivieren kann. Das Vorsehen einer solchen Deaktivierung bei einer Faltschachtelklebemaschine gemäß DE 10 2004 022 212 A1 birgt aber das Risiko in sich, dass der Bediener versucht ist, in die laufende Maschine hineinzugreifen, um notwendige Einstellungen vorzunehmen, da er beide Hände frei hat. Das Verletzungsrisiko wäre somit nicht ausreichend minimiert.

Es ist daher Aufgabe der vorliegenden Erfindung, eine Faltschachtelklebemaschine für die Verarbeitung von Faltschachtelzuschnitten zu entwickeln, die zum einen den Sicherheitsrichtlinien entspricht und den Bediener somit gegen Gefährdungen schützt, auf der anderen Seite aber die Zugänglichkeit zur Faltschachtelklebemaschine nur in minimalster Weise beeinträchtigt.

Diese Aufgabe wird erfindungsgemäß gelöst, durch die Merkmale von Anspruch 1.

Durch den erfindungsgemäßen Einsatz eines mobilen Bedienteils, mit welchem die Sicherheitseinrichtung daktiviert werden kann, wird die Zugänglichkeit zur Faltschachtelklebemaschine verbessert. Um gleichzeitig aber zu verhindern, dass der Bediener mit einer oder beiden Händen in die laufende Maschine greifen kann, muss das mobile Bedienteil zur Deaktivierung der Sicherheitsvorrichtung vom Bediener mit beiden Händen bedient werden. Um dies sicherzustellen, weist das mobile Bedienteil entsprechende Kontakte auf. Wird das mobile Bedienteil nur mit einer Hand, also an einem Kontakt bedient, wird die Sicherheitseinrichtung nicht deaktiviert. Ebenso wird die Sicherheitseinrichtung sofort wieder aktiviert, wenn der Bediener, nachdem er beide Kontakte zur Deaktivierung berührt hat, einen Kontakt wieder loslässt.

Hierzu sind die Kontakte vorzugsweise an sich gegenüberliegenden Seiten des mobilen Bedienteils, also entweder rechts und links, oder oben und unten, oder an der Ober- und Unterseite angebracht. Hierdurch wird sichergestellt, dass der Bediener tatsächlich beide Hände am mobilen Bedienteil hat, wenn er die Sicherheitseinrichtung deaktiviert.

In einer bevorzugten Ausführungsform sind die Kontakte als Druckschalter ausgebildet. Sobald der Druck auf einen der Schalter aufgehoben wird, der Bediener also seine Hand vom Schalter nimmt, wird die Sicherheitseinrichtung sofort wieder aktiviert.

In einer besonders bevorzugten Ausführungsform sind die Kontakte mit einer Vorrichtung zur kapazitiven Messung ausgestattet. Hierdurch wird es ermöglicht, zu messen, ob an beiden Kontakten gleiche Oberflächen anliegen. Es wird beispielsweise vermieden, dass der Bediener das mobile Bedienteil nur mit einer Hand bedient, indem er den anderen Kontakt gegen eine andere Oberfläche drückt. Über die kapazitive Messung könnte somit zwischen Haut und einer anderen Oberfläche beispielsweise einer Maschinenseitenwand unterschieden werden.

Vorteilhafterweise ist das mobile Bedienteil entweder über ein Kabel oder drahtlos mit der Sicherheitseinrichtung verbunden. Dies ermöglicht es dem Bediener, die Prozessabläufe aus unmittelbarer Nähe zu beobachten. Dennoch sind seine Hände über das mobile Bedienteil geschützt.

Um dem Bediener eine zusätzliche Hilfe über den Zustand der Sicherheitseinrichtung zu geben, ist es vorteilhaft, den Zustand über ein akustisches oder optisches Signal anzuzeigen.

Nachfolgend wird die Erfindung anhand eines Ausführungsbeispiels und an Figuren erläutert. Es zeigen:
- Figur 1: in einer perspektivischen Darstellung beispielhaft einzelne Bearbeitungsstationen einer Faltschachtelklebemaschine,
- Figur 2: die isometrische Ansicht auf einen Teil der Faltstation der Faltschachtelklebemaschine gemäß Figur 1
- Figur 3: die Seitenansicht auf einen Ausschnitt einer Faltschachtelklebemaschine gemäß Figur 1
- Figur 4a: die Draufsicht auf ein Mobilteil zum Deaktivieren der Sicherheitseinrichtung
- Figur 4b: die Draufsicht auf ein alternatives Mobilteil zum Deaktivieren der Sicherheitseinrichtung

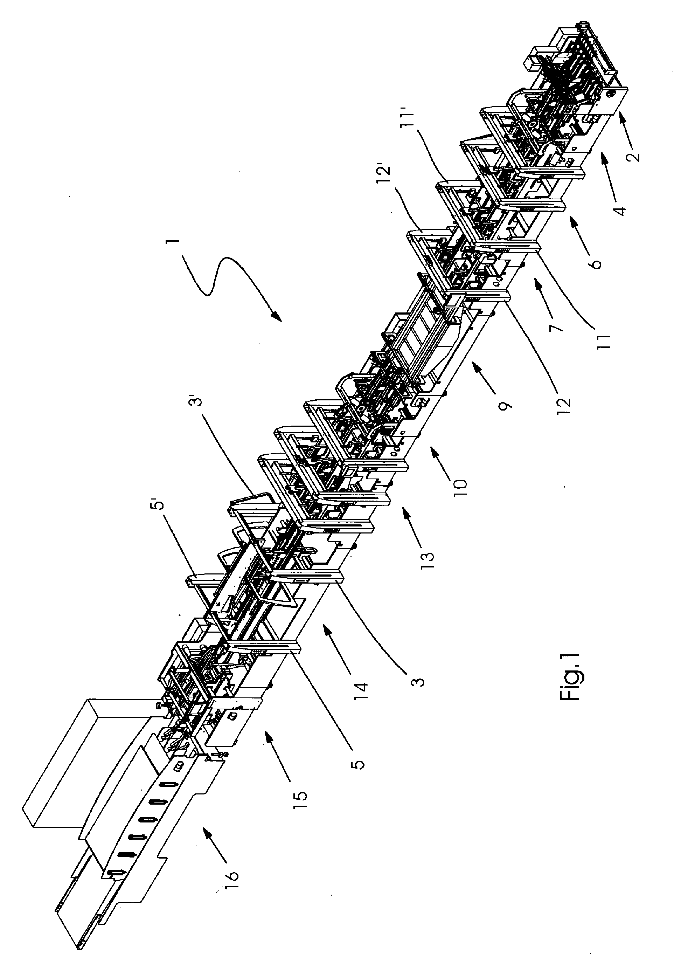

Die Faltschachtelklebemaschine 1 beginnt in Fig. 1 rechts unten mit einem Einleger 2, der die zu verarbeitenden Zuschnitte mit hoher Geschwindigkeit aus einem Stapel nacheinander abzieht und einzeln der nachfolgenden Bearbeitungsstation zuführt. Im Anschluss an den Einleger 2 folgt eine Ausrichtstation 4, in der die Zuschnitte einzeln gegen einen seitlichen Anschlag ausgerichtet werden. Durch die Ausrichtstation führen nicht näher dargestellte, quer positionierbare Maschinenkomponenten in Form von zwei Riemenpaaren, die als Förderelemente dienen und über Stellantriebe quer positioniert werden können. Anschließend folgt ein Vorbrecher 6 und eine erste Faltstation 7. Sowohl durch den Vorbrecher 6 als auch durch die Faltstation 7 führen nicht näher dargestellte quer positionierbare Maschinenkomponenten in Form von Riemenpaaren als Förderelemente, die abhängig vom Zuschnittstyp mit einem Stellantrieb quer positioniert werden. Zu Beginn der Faltstation 7 ist eine nicht dargestellte quer positionierbare Maschinenkomponente in Form eines Klebstoffauftragwerkes angeordnet, das ebenfalls mit einem Stellantrieb quer positioniert wird, damit ein Klebestreifen auf den zu verklebenden Faltlappen aufgetragen wird.

Auf die Faltstation 7 folgt eine Drehstation 9 mit einer nachfolgenden weiteren Ausrichtstation 10. Die Drehstation 9 enthält zum Drehen der Zuschnitte um eine senkrechte Achse um 90° zwei parallel nebeneinander angeordnete Förderstrecken, deren Geschwindigkeit getrennt einstellbar ist. Die Zuschnitte liegen auf beiden Förderstrecken auf, so dass sie bei unterschiedlichen Geschwindigkeiten der beiden Förderstrecken gedreht werden. Die beiden Förderstrecken enthalten angetriebene Rollen als Förderelemente. Um die bereits gefalteten Zuschnittsteile am Öffnen zu hindern, werden sie beim Durchlauf durch die Drehstation 9 von einem nicht dargestellten plattenförmigen Niederhalter niedergehalten.

Die nächste Bearbeitungsstation 13 dient dazu, vom Schachteltyp abhängige Bearbeitungsvorgänge durchzuführen; beispielsweise werden weitere Rilllinien vorgebrochen oder Sonderfaltungen durchgeführt. Anschließend folgt eine zweite Faltstation 14, in der vorher mit einer Klebenaht versehene Zuschnittsteile um 180° umgefaltet werden. Danach folgt eine Überleitstation 15, von der die gefalteten, mit noch nicht abgebundenen Klebenähten versehenen Zuschnitte in allen Teilen exakt ausgerichtet der nachfolgenden Sammel- und Presseinrichtung 16 zugeführt werden. In der Sammel- und Presseinrichtung 16 wird zunächst ein Schuppenstrom aus gefalteten Zuschnitten gebildet, der anschließend zwischen fördernden Pressbändern für einige Zeit unter Druck gehalten wird, damit die Klebenähte abbinden. Alle diese Bearbeitungsstationen enthalten Fördermittel für die Schachteln, die beispielweise mittels servomotorischer Antriebe angetrieben werden.

In den Faltstationen 7,14 kann ein Überholhaken eingesetzt werden, durch den eine Gefährdung des Bedieners im Betrieb der Faltschachtelklebemaschine hervorgerufen wird. Im Falle eines solchen den Bediener der Anlage gefährdenden Maschinenteils muss dieses Maschinenteil gegen einen Zugriff geschützt sein. Eine mechanische Verriegelung zwischen den Ständern 11, 11', 12, 12' der Faltstation 7 bzw. 3, 3', 5, 5' der Faltstation 14 wirkt sich nachteilig zum Beispiel während des Einrichtens der Maschine, auf die Rüstzeiten aus. Ein erfindungsgemäßer Einsatz eines Lichtvorhangs, der in die Maschine an der gefährdenden Stelle integriert ist, hat aber keinen Einfluss auf die Zugänglichkeit anderer Maschinenteile. Insbesondere da die Ständer gleichzeitig als Träger für zum Beispiel Notausschalter 8 dienen. Wie aus der Draufsicht zu ersehen, sind die Ständer 3, 3', 5, 5', 11, 11', 12, 12' auf beiden Seiten der Faltstationen 7, 14 angeordnet. So kann insbesondere zum Beispiel ein Sender des Lichtvorhangs in dem Ständer 11 und ein entsprechender Empfänger in dem Ständer 12 angeordnet sein. Entsprechendes gilt für die übrigen Ständer.

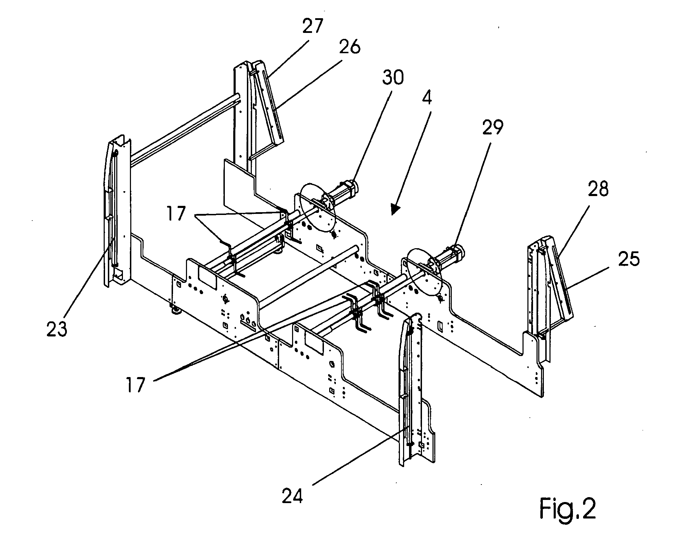

Im Weiteren wird die Figur 2 beschrieben. Die Ständer 3, 3', 5, 5', 11, 11', 12, 12', die tragende Bestandteile der Faltschachtelklebemaschine 1 sind, sind in der Weise ausgeführt, dass die Elemente für die Lichtvorhänge in ihnen befestigt werden können und dass sie gleichzeitig die Lichtvorhänge 23, 24, 25, 26 durchlassen können. Dazu sind in die abdeckenden Blechmäntel der Ständer Längsschlitze 27, 28 eingearbeitet, durch die der Sender des Lichtvorhangs 23, 24, 25, 26 mit seinem zugehörigen Empfänger 23, 24, 25, 26 zusammenarbeiten kann. Eine entsprechende dreidimensionale Ansicht der Anordnung der Lichtvorhänge 23, 24, 25, 26 in der Faltstation 4 ist in Figur 2 wiedergegeben. In der Figur 2 sind ebenfalls die Antriebe 29, 30 des Überholhakens 17, die als servomotorische Antriebe ausgelegt sind, eingezeichnet. Die servomotorischen Antriebe 29, 30 sind unmittelbar an die Welle angeschlossen, auf der die Überholhaken 17 befestigt sind.

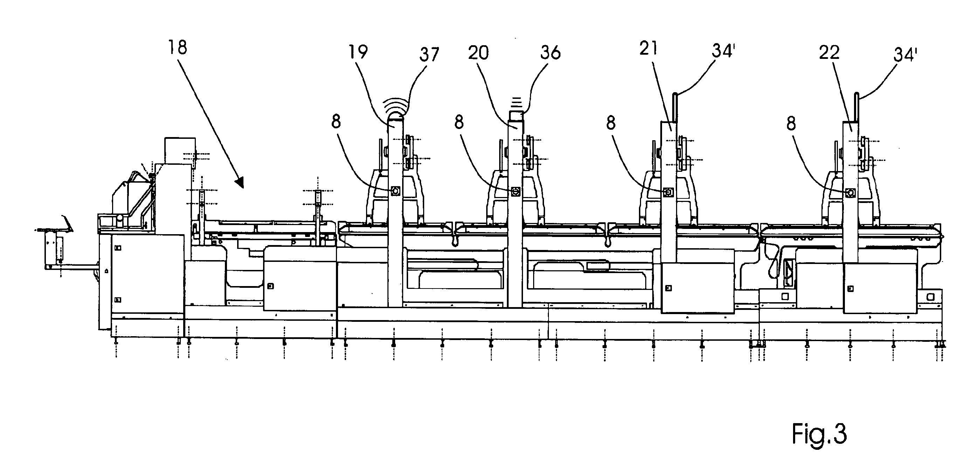

In der Figur 3 ist ein Ausschnitt aus einer Faltschachtelklebemaschine 18 dargestellt. Die Faltschachtelklebemaschine 18 besitzt mehrere Bearbeitungsstationen mit einem oder mehreren Ständern19, 20, 21, 22. Je nach Gefährdung des Bedieners kann nun ein individuell einzurichtender Bereich der Maschine 18 mittels eines Lichtvorhangs gesichert werden. So ist es beispielsweise vorstellbar, den Lichtvorhang zwischen den Ständern 19 und 20 oder zwischen den Ständern 19 und 21 oder zwischen den Ständern 19 und 22 oder den Ständern 20 und 22 oder jeder beliebigen anderen Kombination an Ständern 19, 20, 21, 22 anzuordnen.

Bevorzugt ist der Lichtvorhang 23, 24, 25, 26 in Abhängigkeit der Aktivierung gefährdender Maschinenteile, im Beispiel der Überholhaken 17, aktivierbar. Sind keine gefährdenden Maschinenteile im Einsatz, wird der Lichtvorhang 23, 24, 25, 26 deaktiviert, damit die Maschine für Bedienpersonen besser zugänglich ist.
Wie aus der Figur 2 ebenfalls hervorgeht, kann es vorkommen, dass die Überholhaken 17 sehr weit an den seitlichen Rändern der Faltstation 7 angeordnet ist. Um die Faltschachtelklebemaschine und deren Antriebe 29, 30 in entsprechend kurzer Zeit, nach dem Eindringen eines Bedieners in den Lichtvorhang 23, 24, 25, 26 zum Anhalten zu bringen, kann es notwendig sein, die Lichtvorhänge 25, 26 seitlich vorstehend anzuordnen. Eine entsprechende Verschiebung des Lichtvorhangs 25, 26 ist in Figur 2 dargestellt. Der untere Bereich des Lichtvorhangs 25, 26 steht seitlich weiter über die Anlage hinaus als der obere Bereich. Dies kann auch dann notwendig sein, wenn zum Beispiel, wie in der Figur 2 dargestellt, die Servomotoren 29, 30 ein ungehindertes Arbeiten des Lichtvorhangs 25, 26 verhindert. So kann der Lichtvorhang 25, 26 auch außerhalb von die Faltstation bildenden Maschinenteilen platziert werden.

Ist die Maschine betriebsbereit oder in der Produktion, und nähert sich ein Bediener dem Lichtvorhang 23, 24, 25, 26, so dass er in einen Gefahrenbereich gelangen könnte, so schaltet und bremst die Maschine bei einer Unterbrechung des Lichtvorhangs 23, 24, 25, 26 innerhalb kürzester Zeit ab. Entweder werden nur die Überholhaken selbst, bevorzugt innerhalb von 0,10 Sekunden angehalten, oder zusätzlich werden die servomotorischen Förderantriebe der Faltschachtelklebemaschine 1 angehalten, so dass diese innerhalb kürzester Zeit von der vollständig abgebremst wird, beispielsweise innerhalb von 0,25 Sekunden von einer Faltschachtelfördergeschwindigkeit von 300 m/min auf 0 m/min. In dieser Zeit ist es dem Bediener nicht möglich, vom Bereich außerhalb des Lichtvorhangs 23, 24, 25, 26 in den Gefahrenbereich, zum Beispiel der Überholhaken 17 zu gelangen. Die Faltschachtelklebemaschine entspricht somit ebenfalls den Richtlinien geltender Sicherheitsvorschriften.

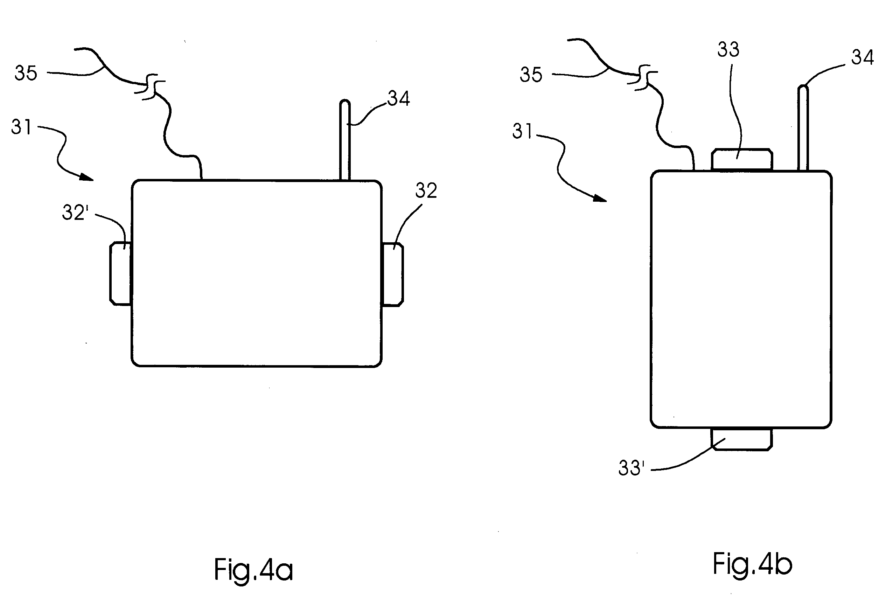

Um es nun dem Bediener zu ermöglichen, Prozessabläufe etwa in Maschinenmitte oder im Vorbrecher zu beobachten, kann er mittels eines mobilen Bedienteils 31 den aktivierten Sicherheitsvorhang deaktivieren. Um dennoch seine Hände gegen Verletzung zu schützen, ist dieses Bedienteil als Zweihandbedienteil ausgeführt; d. h. der Sicherheitsvorhang wird nur deaktiviert, wenn der Bediener beide Hände am Bedienteil hat. Hierzu weist das Bedienteil, wie in Fig. 4a und 4b dargestellt, zwei Kontakte in Form von beispielsweise Druckschaltern (32, 32', 33, 33') auf, die gleichzeitig betätigt werden müssen. Das Bedienteil überträgt dann das Deaktivierungssignal entweder über eine Antenne 34 am Bedienteil zu einer Antenne 34' an den Ständern oder alternativ über ein Kabel 35, welches mit seinem einen Ende mit dem Bedienteil verbunden ist und mit seinem anderen Ende in nicht näher dargestellter Weise mit den Ständern.

Um dem Bediener eine zusätzliche Hilfe über den Zustand der Sicherheitseinrichtung zu geben, kann der Zustand wie in Fig. 3 beispielhaft dargestellt über ein akustisches Signal in Form eines Lautsprechers 36 oder einer Signallampe 37, welche auf den Ständern (3, 3', 11, 11', 12, 12', 19, 20, 21, 22) angebracht sind, angezeigt werden.

**Bezugszeichenliste**

| | | | |
|---|---|---|---|
| 1 | Faltschachtelklebemaschine | 19 | Ständer |
| 2 | Einleger | 20 | Ständer |
| 3, 3' | Ständer | 21 | Ständer |
| 4 | Ausrichtestation | 22 | Ständer |
| 5, 5' | Ständer | 23 | Lichtvorhang |
| 6 | Vorbrecher | 24 | Lichtvorhang |
| 7 | erste Faltstation | 25 | Lichtvorhang |
| 8 | Notausschalter | 26 | Lichtvorhang |
| 9 | Drehstation | 27 | Längsschlitz |
| 10 | Ausrichtestation | 28 | Längsschlitz |
| 11, 11' | Ständer | 29 | Antrieb |
| 12, 12' | Ständer | 30 | Antrieb |
| 13 | Bearbeitungsstation | 31 | Mobilteil |
| 14 | zweite Faltstation | 32, 32' | Druckschalter |
| 15 | Überleitstation | 33, 33' | Druckschalter |
| 16 | Sammel- und | 34 | Antenne |
| | Presseinrichtung | 35 | Anschlusskabel |
| 17 | Überholhaken | 36 | Lautsprecher |
| 18 | Faltschachtelklebemaschine | 37 | Signallampe |

## Patentansprüche

1. Faltschachtelklebemaschine für die Verarbeitung von Faltschachtelzuschnitten, bestehend aus mindestens einem Einleger (2) zum Bestücken nachfolgender Bearbeitungsstationen, einer Faltstation (7), einem Auftragwerk für einen Klebstoff, einer Überleitstation (15), einer Sammel- und Presseinrichtung (16) und einer Sicherheitseinrichtung für ein bedienergefährdendes Maschinenteil (17), welche als Lichtvorhang (23, 24, 25, 26) ausgebildet ist und in jeweils an den Seiten der Faltschachtelklebemaschine (1) angeordneten Ständern (3, 3', 5, 5', 11, 11', 12, 12') integriert ist
**dadurch gekennzeichnet,**
**dass** die Sicherheitseinrichtung über ein mobiles Bedienteil (31), welches mindestens zwei Kontakte (32, 32', 33, 33') aufweist, wobei die Kontakte vom Bediener nur beidhändig gleichzeitig betätigt werden können, deaktivierbar ist.

2. Faltschachtelklebemaschine nach Anspruch 1,
**dadurch gekennzeichnet,**
**dass** mindestens jeweils ein Kontakt (32, 32', 33, 33') an sich gegenüberliegenden Seiten des mobilen Bedienteils angebracht ist.

3. Faltschachtelklebemaschine nach Anspruch 2,
**dadurch gekennzeichnet,**
**dass** mindestens jeweils ein Kontakt (32, 32', 33, 33') auf der Ober- und Unterseite des mobilen Bedienteil angebracht sind.

4. Faltschachtelklebemaschine nach einem der vorhergehenden Ansprüche,
**dadurch gekennzeichnet,**
**dass** die Kontakte (32, 32', 33, 33') als Druckschalter ausgebildet sind.

5. Faltschachtelklebemaschine nach einem der vorhergehenden Ansprüche,
**dadurch gekennzeichnet,**
**dass** die Kontakte (32, 32', 33, 33') mit einer Vorrichtung zur kapazitiven Messung ausgestattet sind.

6. Faltschachtelklebemaschine nach einem der vorhergehenden Ansprüche,
**dadurch gekennzeichnet,**
**dass** das mobile Bedienteil (31) über ein Kabel (35) mit der Sicherheitseinrichtung verbunden ist.

7. Faltschachtelklebemaschine nach einem der Ansprüche 1 bis 5,
**dadurch gekennzeichnet,**
**dass** das mobile Bedienteil (31) drahtlos über Antennen (34, 34') mit der Sicherheitseinrichtung verbunden ist.

8. Faltschachtelklebemaschine nach einem der vorhergehenden Ansprüche,
**dadurch gekennzeichnet,**
**dass** der Zustand der Sicherheitseinrichtung durch ein akustisches (36) oder optisches Signal (37) angezeigt wird.

## Claims

1. Folder-gluer for processing folding box blanks, comprising at least one feeder (2) for loading following processing stations, a folding station (7), an application unit for a glue, a transfer station (15), a collecting and pressing device (16) and a safety device for a machine part (17) that is hazardous to the operator, the safety device designed as a light curtain (23, 24, 25, 26) integrated in respective stands (3, 3', 5, 5', 11, 11', 12, 12') arranged on the sides of the folder gluer (1),
**characterized in**
**that** the safety device is deactivatable (31) by means of a mobile control element (31) with at least two contacts (32, 32', 33, 33'), which the operator may only actuate simultaneously using both hands.

2. Folder-gluer according to Claim 1,
**characterized in**
**that** at least one respective contact (32, 32', 33, 33') is provided on opposing sides of the mobile control element.

3. Folder-gluer according to Claim 2,
**characterized in**
**that** at least one respective contact (32, 32', 33, 33') is provided on the top and bottom of the mobile control element.

4. Folder-gluer according to any one of the preceding claims,
**characterized in**
**that** the contacts (32, 32', 33, 33') are embodied as push-button switches.

5. Folder-gluer according to any one of the preceding claims,
**characterized in**
**that** the contacts (32, 32', 33, 33') are equipped with a device for capacitive measurement.

6. Folder-gluer according to any one of the preceding claims,
**characterized in**
**that** the mobile control element (31) is connected to the safety device by a wire (35).

7. Folder-gluer according to any one of Claims 1 to 5,
**characterized in**
**that** the mobile control element (31) is wirelessly connected to the safety device via antennae (34, 34').

8. Folder-gluer according to any one of the preceding claims,
**characterized in**
**that** the status of the safety device is indicated by an acoustic (36) or optical signal (37).

## Revendications

1. Machine plieuse-colleuse pour le traitement de découpes de boîtes pliantes, se composant d'au moins un dispositif de dépose (2) pour le remplissage des stations de traitement suivantes, une station de pliage (7), un groupe d'application pour un adhésif, un poste de transfert (15), un dispositif de collecte et de pression (16) et un dispositif de sécurité pour une partie de machine (17) mettant en danger un opérateur, laquelle est réalisée comme un rideau lumineux (23, 24, 25, 26) et est intégré dans des supports (3, 3', 5, 5', 11, 11', 12, 12') disposés respectivement dans des machines plieuse-colleuse (1) de boîtes pliantes
**caractérisée en ce que**
le dispositif de sécurité peut être désactivé par l'intermédiaire d'une unité de commande mobile (31) comprenant au moins deux contacts (32, 32', 33, 33'), dans lequel les contacts peuvent être actionnés uniquement par l'opérateur avec les deux mains simultanément.

2. Machines plieuse-colleuse de boîtes pliantes selon la revendication 1,
**caractérisée en ce**
**qu'**au moins un contact (32, 32', 33, 33") est appliqué à des côtés opposés de l'élément de commande mobile.

3. Machines plieuse-colleuse de boîtes pliantes selon la revendication 1,
**caractérisée en ce**
**qu'**au moins un contact (32, 32', 33, 33") est respectivement monté sur fa face supérieure et inférieure de l'élément mobile de commande.

4. Machines plieuse-colleuse de boîtes pliantes selon l'une des revendications précédentes
**caractérisée en ce que**
les contacts (32, 32', 33, 33') sont conçus comme des interrupteurs à pression.

5. Machines plieuse-colleuse de boîtes pliantes selon l'une des revendications précédentes
**caractérisée en ce que**
les contacts (32, 32', 33, 33") sont munis d'un dispositif pour la mesure capacitive.

6. Machines plieuse-colleuse de boîtes pliantes selon l'une des revendications précédentes
**caractérisée en ce que**
l'unité de commande mobile est reliée par l'intermédiaire d'un câble (35) au dispositif de sécurité.

7. Machines plieuse-colleuse de boîtes pliantes selon l'une des revendications précédentes
**caractérisée en ce que**
l'unité de commande mobile est reliée sans fil par l'intermédiaire d'antennes (34, 34') au dispositif de sécurité.

8. Machines plieuse-colleuse de boîtes pliantes selon l'une des revendications précédentes
**caractérisée en ce que**
l'état du dispositif de sécurité est annoncé par un signal acoustique (36) ou optique (37).
